# EUROPEAN PATENT SPECIFICATION

(11) **EP 2 250 045 B1**
(45) Date of publication and mention of the grant of the patent: **02.05.2012**
(21) Application number: 08872861.3
(22) Date of filing: 25.11.2008
(51) Int. Cl.: B60N 2/52, B60N 2/54, B60N 2/50

(54) **PLANT SUPENSION SYSTEM WITH WEIGHT COMPENSATION**
ANLAGENAUFHÄNGUNGSSYSTEM MIT GEWICHTSAUSGLEICH
SYSTÈME DE SUSPENSION D'INSTALLATION AVEC COMPENSATION DE POIDS

(30) Priority: 28.02.2008 US 39139
(43) Date of publication of application: 17.11.2010
(73) Proprietor: Bose Corporation, Framingham, MA 01701 (US)
(72) Inventor: CLARK, Ian, Ross, Watertown MA 02472 (US)
(74) Representative: Attali, Pascal
(86) International application number: PCT/US2008/084636
(87) International publication number: WO 2009/108234

(56) References cited:
- DE-A1- 10 242 236
- DE-A1-102005 048 961
- DE-B3-102005 011 856
- US-A- 4 913 482

## Description

### TECHNICAL FIELD

This disclosure relates to plant suspension systems supporting loads of varying weight.

### BACKGROUND

Plant suspension systems have long been employed in various vehicles to isolate cargo and/or personnel from jolts encountered by vehicles during travel across roads, across or through water, through air, etc. Such plant suspension systems may take any of a variety of forms, including suspended platforms atop which cargo is set and suspended seats in which personnel sit. Some of such plant suspension systems are passive suspension systems that employ springs of one or more types (e.g., mechanical springs, gas springs, etc.). Other plant suspension systems are active suspension systems that employ actuators of one or more types (e.g., hydraulic rams, linear motors, etc.). Still other plant suspension systems incorporate differing combinations of passive and active suspension elements.

In plant suspension systems in vehicles, especially vehicles traveling over land, it is commonplace to provide isolation from jolts directed in a generally vertical direction (i.e., along a substantially vertical axis). A subset of those plant suspension systems, also provide isolation from jolts directed in at least one generally horizontal direction (i.e., along at least one substantially horizontal axis, such as a "fore-aft" axis or a lateral axis). Unfortunately, a number of these plant suspension systems suffer from allowing the suspended plant to move along that at least one horizontal axis in a manner that changes depending on the weight of the load supported by the plant. In other words, a number of these plant suspension systems employ a design that attempts to achieve a balance between isolating a load from a horizontal jolt encountered by a vehicle and controlling the manner in which a load is permitted move horizontally as part of that isolation effort, but with the limitation that the balance is optimal only for what is deemed to be an average load weight.

Optimizing only for an average load weight means that a load having a weight less than that average load weight will have an inertia in any horizontal movement arising from a horizontal jolt that is all too easily overcome by the horizontal suspension elements such that the load is less effectively isolated from a horizontal jolt. In essence, such lighter loads are more readily subjected to a horizontal jolt than would a load having a load weight that matches the average load weight.

Further, optimizing for an average load weight also means that a load having a weight greater than that average load weight will have an inertia in any horizontal movement arising from a horizontal jolt that cannot be effectively overcome by the horizontal suspension elements as needed such that the load is less effectively isolated from a horizontal jolt. Indeed, a load having a weight greater than that average load weight may acquire enough inertia in a horizontal movement as to utterly overcome the horizontal suspension elements with the result that the load is subjected to "secondary" jolts arising from the plant reaching bump stops or other physical barriers that define a physical limit to a range of travel allowed for by the plant suspension system in a given horizontal direction. Beyond the concern of the load being repeatedly subjected to these secondary jolts, damage to the suspension system may result over time from repeated impacts between components of the suspension system occurring each time that end of that range of travel is reached.

It is unlikely that any plant suspension system will be used to support only loads having a weight that matches what is deemed to be the average load weight for which that plant suspension system is optimized, and indeed, it is far more likely that the majority of loads supported by any plant suspension system will have weights that are either less than or greater than (but not equal to) that average load weight. One solution that has been previously implemented is to incorporate the ability to manually adjust one or more suspension elements of plant suspension systems to accommodate different load weights so that the plant suspension system continues to behave optimally. However, where loads may be frequently changed or may even fluctuate in weight (such as where the load is a person), such manual adjustment becomes cumbersome, since such loads require frequent weighing to determine how their weight has changed in preparation for making such manual adjustments.

DE-B-102005011856 discloses a suspension system coupled to a vehicle and isolating a plant of the vehicle from jolts encountered during travel. A first spring isolates the plant from jolts along a substantially horizontal axis and a second spring to isolate the plant from jolts in a substantially vertical axis. The springs are air springs and are connected to one another.

### SUMMARY

According to the present invention there is provided an apparatus comprising:
a suspension system coupled to a portion of a vehicle and isolating a plant of the vehicle from a jolt encountered by the vehicle during travel;
a first spring incorporated into the suspension system to isolate the plant from at least a portion of the jolt along a substantially horizontal axis through movement along the substantially horizontal axis at a predetermined resonant frequency, wherein the first spring has a variable spring constant that is able to be changed in response to changes in weight of the plant to substantially maintain the predetermined resonant frequency;
a second spring incorporated into the suspension system to isolate the plant from at least a portion of the jolt along a substantially vertical axis; and
a first linkage coupling the first and second springs to change the variable spring constant in response to changes in weight of the plant to substantially maintain the predetermined resonant frequency.

Implementations may include, and are not limited to, one or more of the following features. The plant may include a seat. The first spring may be a gas spring, a hydraulic spring, a spring employing a combination of gas and fluid, or a mechanical spring. The first spring may be linked to a second spring that transfers a change in a pressure of a gas, fluid or combination of gas and fluid to the first spring to adjust the spring constant of the first spring. The first spring may be linked to a second spring that transfers a change in a torque to the first spring to adjust the spring constant of the first spring. Also, a third spring acting at least partially in opposition to the first spring may also be linked to the second spring, such that the spring constant of the third spring is also adjusted so that the first and third springs cooperate to substantially maintain the predetermined resonant frequency. Further, these linkages may each incorporate a damper acting as a low pass filter that substantially permits the second spring to change the spring constant of the first spring (and/or of the third spring, if present) in response to a change in weight of the plant, but which substantially prevents the second spring from changing the spring constant of the first spring (and/or of the third spring, if present) in response to the second spring operating to isolate the plant from the jolt.

The invention also includes a method comprising enabling a spring constant of a first spring of a plant suspension system of a vehicle encountering a jolt during travel to be adjusted in response to changes in weight of the plant to substantially maintain a predetermined resonant frequency of movement along a substantially horizontal axis in isolating the plant from at least a portion of the jolt along the substantially horizontal axis by linking the first spring to a second spring isolating the plant from at least a portion of the jolt along a substantially vertical axis.

Implementations may include, and are not limited to, one or more of the following features. Transferring a change in a pressure of a gas, fluid or combination of gas and fluid from a second spring to the first spring to adjust the spring constant of the first spring. Transferring a change in a torque from a second spring to the first spring to adjust the spring constant of the first spring. Adjusting a spring constant of a third spring acting at least partially in opposition to the first spring so that the first and third springs cooperate to substantially maintain the predetermined resonant frequency. Dampening a transfer of a pressure or a torque between the second spring and the first spring (and/or the third spring, if present) in a manner that serves as a low pass filter that substantially permits the second spring to change the spring constant of the first spring (and/or of the third spring, if present) in response to a change in weight of the plant, but which substantially prevents the second spring from changing the spring constant of the first spring (and/or of the third spring, if present) in response to the second spring operating to isolate the plant from the jolt.

### DESCRIPTION OF THE DRAWINGS

Other features and advantages of the invention will be apparent from the description and accompanying drawings in which:
Figure 1 depicts a plant suspension system.
Figure 2 depicts another plant suspension system.

### DETAILED DESCRIPTION

It should be noted that although the following discussion and accompanying figures center on implementations of a plant suspension system in which the overall plant includes a physical plant implemented as a seat in which a person sits, what is disclosed in that discussion is also applicable to other implementations of plant suspension systems. Other possible forms of suspended plant include, and are not limited to, a suspended trailer floor of a tractor trailer truck, a suspended cabinet in a recreational vehicle, a suspended personnel cabin on board an airplane, a suspended pool table on board a sea vessel, and a whole suspended room on board a sea vessel. Still other possible implementations of suspended plant to which what is disclosed herein is applicable will be clear to those skilled in the art.

It should also be noted that although this discussion centers on suspension systems addressing jolts along substantially horizontal and/or vertical axes and/or planes, this should not be construed as a directional limitation. What is disclosed and claimed herein may be applied to suspension systems configured to address jolts occurring in any given direction, including in rotational directions, and may be applied regardless of how directions of movement are described (e.g., with reference to Cartesian, polar or other coordinate systems). Further, directional terms such as "horizontal" and "vertical" are meant to provide a form of shorthand description for structures that are substantially horizontal or vertical at a time when a vehicle is substantially level with the Earth or substantially plumb, and should not be taken as imposing a requirement of being precisely horizontal or vertical. As those skilled in the art will readily recognize, it is not uncommon for portions of a vehicle that are oriented substantially horizontally or vertically while the vehicle is substantially level with the Earth or substantially plumb (and therefore are referred to as "horizontal" or "vertical" for ease of discussion) to cease to actually be substantially horizontal or vertical as the vehicle is operated to climb or descend inclines, or to be otherwise positioned so as to no longer be level with the Earth or substantially plumb. This same understanding also applies to other directional terms such as "upward," "downward," "forwardly" and "rearwardly."

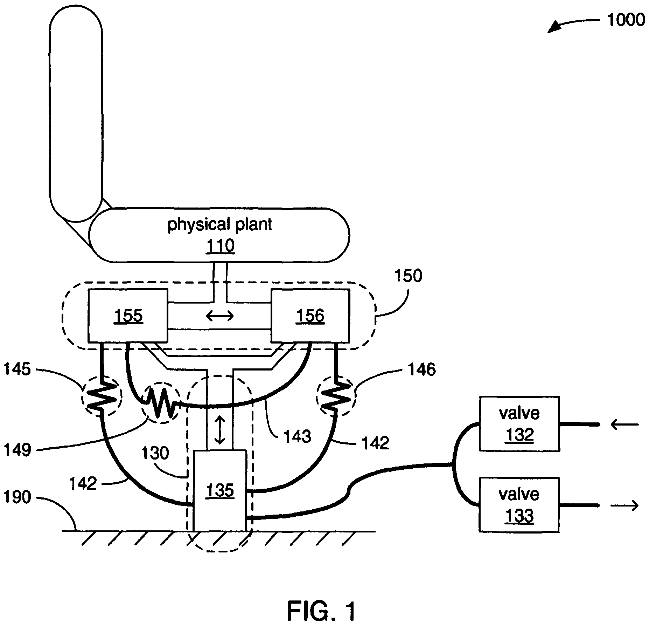

Figure 1 shows a form of plant suspension system 1000 isolating a load that it supports from jolts arising from forces acting on a vehicle during vehicular travel. The plant suspension system 1000 incorporates a physical plant 110, a vertical suspension system 130, and a horizontal suspension system 150. The vertical suspension system 130 isolates the physical plant 110 from jolts occurring along a substantially vertical axis, and the horizontal suspension system 150 isolates the physical plant 110 from jolts occurring along at least one substantially horizontal axis. It should be noted that although the plant suspension system 1000 is depicted as being in the form of a seat suspended in relation to a vehicle floor 190, as has already been discussed, the plant suspension system 1000 may take any of a variety of forms, and further, those skilled in the art will readily recognize that the physical plant 110 may be suspended in relation to any of a variety of other portions of a vehicle into which the plant suspension system 1000 is installed.

As will be explained in greater detail, the plant suspension system 1000 incorporates a load weight compensation capability in which the resonant frequency of the movement along at least one axis of movement of the horizontal suspension system 150 remains substantially constant despite changes in overall plant weight arising from changes in the weight of a load (not shown) supported by the physical plant 110. In embodiments where the physical plant 110 is a seat, it is preferred that this resonant frequency be maintained close to or within the range of 1 Hz to 2Hz for personnel comfort. Discomfort arising from induced movement of organs within the human body, vibration of skeletal structures and/or other physical effects have been observed in suspension systems where a resonant frequency well outside this range has been permitted. In other embodiments where the physical plant 110 is not meant to support people, a different resonant frequency (or range of resonant frequencies) may be chosen that is deemed more appropriate to the characteristics of whatever load is expected to be supported.

As will be explained in greater detail, a transfer of gaseous and/or hydraulic pressure from the vertical suspension system 130 to the horizontal suspension system 150 is employed to adjust a spring constant of one or more suspension elements of the horizontal suspension system 150 to accommodate loads of differing weights supported by the physical plant 110 and maintain a substantially constant resonant frequency. However, it should also be noted that although the plant suspension system 1000 is depicted and discussed herein as having suspension elements operating along substantially horizontal and vertical axes, as has already been discussed, alternate forms of the plant suspension system 1000 may employ suspension elements operating along axes of any orientation. Therefore, this discussion of interaction between horizontal and vertical suspension elements should be taken as being but an example, and not meant to be so limiting.

As depicted, the horizontal suspension system 150 is a passive suspension system incorporating a pair of suspension elements 155 and 156 implemented as gas and/or hydraulic springs acting in opposition to each other. In essence, the suspension elements 155 and 156 allow the physical plant 110 to move along that substantially horizontal axis to isolate a load supported by the physical plant 110 from jolts acting on a vehicle along that axis. However, as those skilled in the art will readily recognize, this depicted quantity, configuration and type of technology of suspension elements is but one example of a wide variety of possible quantities, configurations and types of technologies that may be employed in any given implementation of the horizontal suspension system 150. For example, a hybrid of hydraulic and gas-based operation may be employed. Further, possible implementations of the horizontal suspension system 150 may be partially active suspension systems incorporating one or more actuators (in addition to the passive suspension elements 155 and 156) that actively move the physical plant 110 along at least one axis in a substantially horizontal plane under the control of a controller (not shown) that responds to indications of horizontal accelerations of a vehicle. These other possible implementations may employ the suspension elements 155 and 156 to assist such actuators making up an active portion of the horizontal suspension system 150, and/or to take over for such actuators in the event of a malfunction of such an active portion of the horizontal suspension system 150.

As is further depicted, the vertical suspension system 130 incorporates a single suspension element 135 implemented as a gas and/or hydraulic spring acting generally in opposition to the force of gravity which tends to pull the physical plant 110 downwards towards the Earth. In essence, the suspension element 135 allows the physical plant 110 to move along a substantially vertical axis to isolate a load supported by the physical plant 110 from jolts acting on a vehicle along that axis. However, as is the case with the horizontal suspension system 150, those skilled in the art will readily recognize that the depicted quantity, configuration and type of technology of suspension elements of the vertical suspension system 130 is but one example of a wide variety of possible quantities, configurations and types of technologies that may be employed in any given implementation of the vertical suspension system 130. For example, a hybrid of hydraulic and gas-based operation may be employed. Further, possible implementations of the vertical suspension system 130 may be partially active suspension systems incorporating one or more actuators in addition to the suspension element 135. As is the case with the horizontal suspension system 150, these other possible implementations may employ the suspension element 135 to assist such actuators making up an active portion of the vertical suspension system 130, and/or to take over for such actuators in the event of a malfunction of such an active portion of the vertical suspension system 130.

The suspension element 135 of the vertical suspension system 130 is coupled to each of the suspension elements 155 and 156 of the horizontal suspension system 150 through a pair of linkages 142 through which gas and/or liquid is able to flow between the suspension element 135 and each of the suspension elements 155 and 156. In this way, gas and/or liquid is employed to transfer pressure through the linkages 142 such that the linkages 142 are correctly characterized as being gas-based linkages and/or hydraulic linkages, respectively. More specifically, gas and/or liquid pressure arising within the suspension element 135 as a result of the weight of a load and the physical plant 110 (i.e., the overall plant weight) are transferred to the suspension elements 155 and 156 through the linkages 142. This transfer of pressure has the effect of altering the gas and/or liquid pressures within each of the suspension elements 155 and 156 to thereby alter the spring constants of each of the suspension elements 155 and 156. This allows the spring constants of each of the suspension elements 155 and 156 to be automatically adjusted in response to the different weights of different loads (presuming that the weight of the physical plant 110 does not change), such that the spring behavior of the suspension elements 155 and 156 is caused to become stiffer in response to heavier loads and to become less stiff in response to lighter loads.

It may be deemed desirable for the plant suspension system 1000 to substantially maintain a selected resonant frequency (or a resonant frequency within a selected range of resonant frequencies) of movement of the physical plant 110 in counteracting jolts. This resonant frequency or range of resonant frequencies may be selected based on various characteristics of the load expected to be supported by the physical plant 110. By way of example, where the load is expected to include personnel, then as previously mentioned, it may be desirable for the plant suspension system 1000 to maintain a resonant frequency within the range of 1Hz to 2Hz for the comfort of those personnel. By way of another example, where the load is expected to include a volume of liquid, it may be desirable for the plant suspension system 1000 to maintain a resonant frequency calculated to minimize sloshing based on viscosity or another characteristics of that liquid. Other types of loads may have any of a number of characteristics making a different resonant frequency or range of resonant frequencies more desirable. To accomplish this, various characteristics of the suspension elements 135, 155 and 156, and/or various gas and/or liquid characteristics may be chosen to cause horizontal movement under the control of the horizontal suspension system 150 to substantially maintain a selected resonant frequency independent of the weights of various loads supported by the physical plant 110. More precisely, one or more of these various characteristics may be chosen to ensure that the manner in which the spring constants of the suspension elements 155 and 156 are altered in response to the weight of different loads causes the suspension elements 155 and 156 to substantially maintain a selected resonant frequency (or a resonant frequency within a selected range of resonant frequencies) for movement arising from the horizontal suspension system 150 responding to jolts along a substantially horizontal axis.

Each of these linkages 142 incorporates corresponding dampers 145 and 146 to control the rates of flow of gas and/or liquid between the suspension element 135 and each of the suspension elements 155 and 156. The dampers 145 and 146 prevent the spring-like nature of the suspension elements 155 and 156 from being substantially defeated as a result of gas and/or liquid being allowed to flow all too freely between suspension elements 155 and 156. The dampers 145 and 146 also substantially prevent all too brief changes in pressure of gas and/or liquid within the suspension element 135 arising from jolts along a substantially vertical axis from being transferred to either of the suspension element 155 and 156. To put this another way, the dampers 145 and 146 serve as low pass filters to allow only relatively low frequency changes in pressure of gas and/or liquid within the suspension element 135 to be transmitted through the linkages 142 to the suspension elements 155 and 156. Therefore, relatively short duration changes in pressure within the suspension element 135, such as might occur due to a vertical jolt arising during vehicle travel, will be substantially isolated from the suspension elements 155 and 156. In contrast, relatively long duration changes in pressure with the suspension element 135, such as might occur due to the loading or unloading of a load supported by the physical plant 110, will be conveyed to the suspension elements 155 and 156 through the linkages 142. In this way, the pressure within the suspension element 135, which bears a relationship to the weight of the load supported by the physical plant 110 (again, presuming that the weight of the physical plant 110 does not change, so that the weight of the load is the only portion of the plant weight that varies), is used to adjust the spring constants of each of the suspension elements 155 and 156 for that weight. By way of example, where the load is expected to include personnel, a time constant of 5 seconds to 10 seconds may be selected.

Although the coupling of the suspension element 135 to each of the suspension elements 155 and 156 is depicted as being implemented with entirely separate ones of the linkages 142, those skilled in the art will readily recognize that the linkages 142 may be implemented in a wide variety of other configurations of tubing and/or piping. Further, although the linkages 142 are depicted and described as directly conveying gas and/or liquid between the suspension element 135 and each of the suspension elements 155 and 156, those skilled in the art will readily recognize that the linkages 142 may be implemented in a more indirect form incorporating one or more gas-based and/or hydraulic relays and/or other devices providing an indirect transfer of pressure.

Although the linkages 142 are depicted as incorporating physically distinct dampers 145 and 146 positioned amidst each of the linkages 142, those skilled in the art will readily recognize that the dampers 145 and/or 146 may take any of a wide variety of forms, and may be positioned at the point of connection between the linkages 142 and one or more of the suspension elements 135, 155 and 156. By way of example, at least a portion of the very tubing and/or piping of which the linkages 142 are formed may have an internal diameter chosen to be small enough to serve as a damper. By way of another example, each of the dampers 145 and 146 may be implemented as a sintered metal plug having dimensions and a porosity chosen to achieve a selected rate at which gas and/or liquid flows therethrough. Further, where the linkages 142 incorporate one or more relays and/or other devices to provide an indirect transfer of pressure, such relays and/or other devices may also serve as one or both of the dampers 145 and 146.

In addition to the transfer of gas and/or liquid between the suspension element 135 and each of the suspension elements 155 and 156 through the linkages 142, the suspension elements 155 and 156 may be more directly coupled through another linkage 143 to more directly permit gas and/or liquid to be transferred between them in some embodiments. In a manner not unlike the linkages 142, the linkage 143 incorporates another damper 149, again to prevent the spring behavior of the suspension elements 155 and 156 from being substantially defeated. The linkage 143 may be provided where it is deemed desirable to permit a flow of gas and/or liquid between the suspension elements 155 and 156 at rate greater than what is possible indirectly through the linkages 142 and both of the dampers 145 and 146.

It should be noted that although the horizontal suspension system 150 has been depicted as implemented with the opposing pair of separate and distinct suspension elements 155 and 156, those skilled in the art will readily recognize that the suspension elements 155 and 156 may alternatively be physically combined into a single dual-chamber suspension element in which each chamber is coupled to the suspension element 135 through the dampers 145 and 146. Further, where such a dual-chamber suspension element is employed, and where it is desired to have a more direct flow of gas and/or liquid between those two chambers (such as what is provided through the linkage 143 incorporating the damper 149), such a coupling may be made via a passage formed directly between the two chambers with the passage being formed to have dimensions chosen to allow the passage to serve as an implementation of the linkage 143 incorporating the damper 149.

Given that the suspension element 135 is a gas and/or hydraulic spring, as has been discussed, the suspension element 135 may be coupled to one or both of a supply valve 132 to add gas and/or fluid to the suspension element 135 and a bleed valve 133 to release gas and/or fluid from the suspension element 135. In some embodiments, the supply valve 132 and the bleed valve 133 are employed to allow the distance of the physical plant 110 from the vehicle floor 190 to be adjusted. Where the physical plant 110 is a seat, such a distance may be made adjustable for the comfort of personnel sitting in it. In other embodiments, the supply valve 132 and the bleed valve 133 may be operable by a controller (not shown) to actively move the physical plant 110 closer to and further away from the vehicle floor 190 to counteract jolts, such that the vertical suspension system 130 thereby becomes (at least partially) an active suspension system.

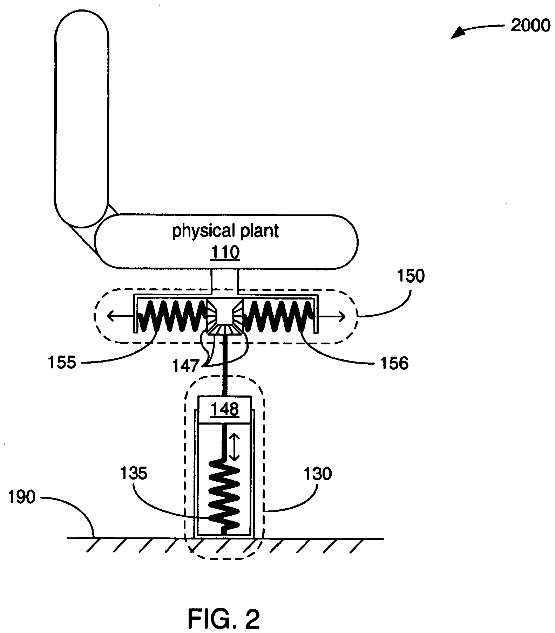

Figure 2 shows another form of plant suspension system 2000 also isolating a load that it supports from jolts arising from forces acting on a vehicle as a result of vehicular travel. It should be noted that due to a number of substantial similarities between the plant suspension system 1000 of Figure 1 and the plant suspension system 2000 of Figure 2, corresponding elements have been designated with identical numerical labels. Like the plant suspension system 1000 of Figure 1, the plant suspension system 2000 of Figure 2 incorporates a physical plant 110, a vertical suspension system 130 isolating the physical plant 110 from jolts occurring along a substantially vertical axis, and a horizontal suspension system 150 isolating the physical plant 110 from jolts occurring along at least one substantially horizontal axis. The plant suspension system 2000 also incorporates a load weight compensation capability in which the resonant frequency of the movement along at least one axis of movement of the horizontal suspension system 150 remains substantially constant despite changes in load weight. Further, although the plant suspension system 2000 is depicted as being in the form of a seat suspended in relation to a vehicle floor 190, in other embodiments, the physical plant 110 may be suspended in relation to any of a variety of other portions of a vehicle into which the plant suspension system 2000 is installed.

Like the horizontal suspension system 150 of the plant suspension system 1000, the horizontal suspension system 150 of the plant suspension system 2000 is depicted as being a passive suspension system incorporating a pair of suspension elements 155 and 156 acting in opposition to each other. However, unlike horizontal suspension system 150 of the plant suspension system 1000, the suspension elements 155 and 156 in the plant suspension system 2000 are implemented as coiled mechanical springs. Further, like the suspension elements 155 and 156 of the plant suspension system 1000, the suspension elements 155 and 156 of the plant suspension system 2000 allow the physical plant 110 to move along a substantially horizontal axis to isolate a load supported by the physical plant 110 from jolts acting along that axis. As those skilled in the art will readily recognize, this depicted quantity, configuration and type of technology of suspension elements is but one example of a wide variety of possible quantities, configurations and types of technologies that may be employed in any given implementation of the horizontal suspension system 150. Further, possible implementations of the horizontal suspension system 150 may be partially active suspension systems incorporating one or more actuators in addition to the passive suspension elements 155 and 156. These other possible implementations may employ the suspension elements 155 and 156 to assist such actuators, and/or to take over for such actuators in the event of their malfunction.

Like the vertical suspension system 130 of the plant suspension system 1000, the vertical suspension system of 130 of the plant suspension system 2000 is depicted as incorporating a single suspension element 135 acting generally in opposition to the force of gravity which tends to pull the physical plant 110 downwards towards the Earth. However, unlike the vertical suspension system 130 of the plant suspension system 1000, the suspension element 135 of the plant suspension system 2000 is implemented as a coiled mechanical spring. Further, like the suspension element 135 of the plant suspension system 1000, the suspension element 135 of the plant suspension system 2000 allows the physical plant 110 to move along a substantially vertical axis to isolate a load supported by the physical plant 110 from jolts acting along that axis. As is the case with the horizontal suspension system 150, those skilled in the art will readily recognize that the depicted quantity, configuration and type of technology of suspension elements of the vertical suspension system 130 is but one example of a wide variety of possible quantities, configurations and types of technologies that may be employed in any given implementation of the vertical suspension system 130. Further, possible implementations of the vertical suspension system 130 may be partially active suspension systems incorporating one or more actuators in addition to the suspension element 135. As is the case with the horizontal suspension system 150, these other possible implementations may employ the suspension element 135 to assist such actuators, and/or to take over for such actuators in the event of their malfunction.

As is depicted, one end of the coil of the suspension element 135 of the vertical suspension system 130 is coupled to one end of the coils of each of the suspension elements 155 and 156 of the horizontal suspension system 150 through a triplet of intermeshed beveled toothed gears of a linkage 147 to transfer torque among the suspension elements 135, 155 and 156. In contrast to the linkages 142 and 143 of the plant suspension system 1000 being gas-based and/or hydraulic in nature, the transfer of torque through the linkage 147 of the plant suspension system 2000 results in the linkage 147 that is correctly characterized as a mechanical linkage. The other ends of the coils of each of these suspension elements is fixed in a manner that does not allow those ends to rotate relative to the rest of the plant suspension system 2000. A shaft of the linkage 147 that couples one end of the coil of the suspension element 135 to its corresponding one of the triplet of gears of the linkage 147 extends through a drag brake 148 incorporated into the linkage 147 to introduce a predetermined amount of friction acting against the transfer of torque among these three suspension elements, thereby acting as a damper to control the rate at which torque is transferred.

As those familiar with coil springs will readily recognize, as a coil spring is compressed such that the ends of a coil are moved towards each other along the axis of the coil, the diameter of the coil tends to increase (i.e., the coil tends to expand radially) and/or one end of the coil tends to rotate relative to the other end in a rotational direction that tends to increase the quantity of windings in the coil. Therefore, as load weight and the weight of the physical plant 110 (i.e., the weight of the overall plant) bear down on the suspension element 135, the resulting compression of the coil of the suspension element 135 causes the end of that coil that is coupled to one of the triplet of gears of the linkage 147 to rotate in a direction that corresponds to an increase in the number of windings in that coil. As that rotation occurs, corresponding ends of the coils of the suspension elements 155 and 156 that are also coupled to corresponding ones of the triplet of gears of the linkage 147 are rotated in a direction that actually tends to decrease the number of windings in those coils. By rotating the coils of the suspension elements 155 and 156 in a direction that tends to decrease the number of windings, a greater resistance against being compressed is introduced into the coils of each of the suspension elements 155 and 156, thereby increasing the stiffness of their spring behavior. The degree of rotation of the rotatable ends of the coils of all three of these suspension elements is increased with any increase in the weight of the load supported by the physical plant 110, and correspondingly, the stiffness of the spring behavior of each of the suspension elements 155 and 156 is also increased with any increase in the weight of the load (again, presuming that the weight of the physical plant 110 is unchanging). In this way, and not unlike the suspension elements 155 and 156 of the plant suspension system 1000, the spring constants of each of the suspension elements 155 and 156 of the plant suspension system 2000 are increased as the weight of the load increases.

In a manner somewhat like the dampers 145 and 146 of the plant suspension system 1000, the drag brake 148 of the plant suspension system 2000 serves as a damper to substantially prevent spurious alterations in the spring constants of each of the suspension elements 155 and 156 arising from the suspension element 135 counteracting jolts along a substantially vertical axis. The friction introduced by the drag brake 148 against rotational movement prevents the triplet of gears of the linkage 147 from rotating quickly enough to transfer spurious rotations between the coils of these three suspension elements. To put this another way, the drag brake 148 in its role as a damper functions as a low pass filter allowing only relatively low frequency rotations in the coil of the suspension element 135 to be transmitted to the coils of the suspension elements 155 and 156. In this way the spring constants of the suspension elements 155 and 156 are altered to compensate for the weight of the physical plant 110 and the load (i.e., the weight of the overall plant), but not altered in response to the suspension element 135 serving to isolate the physical plant 110 and the load from jolts along a substantially vertical axis.

In the plant suspension system 2000, one or more physical characteristics of the coils (e.g., dimensions, choice of material, etc.) of the suspension elements 155 and 156 are sized and/or selected relative to those same characteristics of the coil of the suspension element 135 to ensure that the resonant frequency of movement of the physical plant 110 along the substantially horizontal axis of the horizontal suspension system 150 is substantially maintained independent of variations in the weight of the load.

## Claims

1. An apparatus comprising:
a suspension system (1000) coupled to a portion of a vehicle and isolating a plant (110) of the vehicle from a jolt encountered by the vehicle during travel;
a first spring (155/156) incorporated into the suspension system to isolate the plant from at least a portion of the jolt along a substantially horizontal axis through movement along the substantially horizontal axis at a predetermined resonant frequency, wherein the first spring has a variable spring constant that is able to be changed in response to changes in weight of the plant (110) to substantially maintain the predetermined resonant frequency;
a second spring (135) incorporated into the suspension system to isolate the plant (110) from at least a portion of the jolt along a substantially vertical axis; and
a first linkage (142) coupling the first and second springs to change the variable spring constant in response to changes in weight of the plant to substantially maintain the predetermined resonant frequency.

2. The apparatus of claim 1, wherein the plant (110) comprises a seat of the vehicle.

3. The apparatus of claim 1, wherein the first spring (155/156) is a type of spring selected from a group of types of springs consisting of a gas spring, a hydraulic spring and a spring employing a combination of gas and fluid.

4. The apparatus of claim 3, wherein the first linkage (142) conducts a flow of a substance between the first (155/156) and second (135) springs wherein the substance has a physical state selected from a group of physical states consisting of a gas, a liquid and a combination of a gas and a liquid; and further comprising a first damper (145,146) incorporated into the first linkage (142) and acting as a low pass filter to substantially permit a change in pressure of the substance in the second spring that corresponds to a change in weight of the plant (110) to be transferred to the first spring to adjust the spring constant of the first spring, and substantially preventing a change in pressure of the substance in the second spring that corresponds to the second spring isolating the plant from the jolt from being transferred to the first spring.

5. The apparatus of claim 4, further comprising a valve (133) to alter the pressure of the substance within the second spring to adjust a height of the plant (110) relative to the portion of the vehicle.

6. The apparatus of claim 4, further comprising:
a third spring (156/155) incorporated into the suspension system, acting at least partially in opposition to the first spring (155/156), and having a variable spring constant that changes in response to changes in weight of the plant to cooperate with the first spring to substantially maintain the predetermined resonant frequency;
a second linkage (142) coupling the third and second springs to enable a flow of the substance therebetween; and
a second damper (146,145) incorporated into the second linkage and acting as a low pass filter to substantially permit a change in pressure of the substance in the second spring that corresponds to a change in weight of the plant (110) to be transferred to the third spring to adjust the spring constant of the third spring, and substantially preventing a change in pressure of the substance in the second spring (135) that corresponds to the second spring isolating the plant from the jolt from being transferred to the third spring.

7. The apparatus of claim 6, further comprising:
a third linkage (143) coupling the first (155) and third (156) springs to enable a flow of the substance therebetween; and
a third damper (149) incorporated into the third linkage.

8. The apparatus of claim 1, wherein the first spring (135) is a mechanical spring.

9. The apparatus of claim 8, wherein the first linkage transfers torque between the first (155) and second (135) springs; and further comprising a damper (148) incorporated into the first linkage and acting as a low pass filter to substantially permit a change in torque that corresponds to a change in weight of the plant (110) to be transferred from the second spring (135) to the first spring to adjust the spring constant of the first spring, and substantially preventing a change in torque that corresponds to the second spring isolating the plant from the jolt from being transferred from the second spring to the first spring.

10. The apparatus of claim 9, further comprising a third spring (156) incorporated into the suspension system, acting at least partially in opposition to the first spring (155) and having a variable spring constant that changes in response to changes in weight of the plant (110) to cooperate with the first spring to substantially maintain the predetermined resonant frequency, and wherein the linkage couples the first and third springs to transfer torque therebetween.

11. A method comprising enabling a spring constant of a first spring (155/156) of a plant (110) suspension system of a vehicle encountering a jolt during travel to be adjusted in response to changes in weight of the plant to substantially maintain a predetermined resonant frequency of movement along a substantially horizontal axis in isolating the plant from at least a portion of the jolt along the substantially horizontal axis by linking the first spring (155/156) to a second spring (135) isolating the plant from at least a portion of the jolt along a substantially vertical axis.

12. The method of claim 11, wherein linking the first spring (155/156) to the second spring (135) comprises coupling the first and second springs to enable a substance having a physical state selected from the group consisting of a gas, a liquid and a combination of a gas and a liquid to flow therebetween, wherein the pressure of the substance within the second spring changes in response to changes in weight of the plant (110).

13. The method of claim 12, further comprising altering the pressure of the substance within the second spring (135) to adjust a height of the plant (110) relative to the portion of the vehicle.

14. The method of claim 11, wherein linking the first spring (155/156) to the second spring (135) comprises mechanically coupling the first and second springs to enable torque to be transferred therebetween, wherein the torque transmitted by the second spring changes in response to changes in weight of the plant.

15. The method of claim 14, further comprising damping the transfer of torque between the first (155/156) and second (135) springs to substantially permit a change in torque to be transferred from the second spring to the first spring that corresponds to a change in weight of the plant (110), and substantially preventing a change in torque from being transferred from the second spring to the first spring that corresponds to the second spring isolating the plant from the jolt.

## Patentansprüche

1. Vorrichtung, umfassend:
ein Aufhängungssystem (1000), das mit einem Teil eines Fahrzeugs gekoppelt ist und eine Einrichtung (110) des Fahrzeugs von einem Stoß isoliert, den das Fahrzeug unterwegs erfährt;
eine erste Feder (155/156), die in das Aufhängungssystem eingebaut ist, um die Einrichtung von mindestens einem Teil des Stoßes entlang einer im Wesentlichen waagerechten Achse durch eine Bewegung entlang der im Wesentlichen waagerechten Achse auf einer vorherbestimmten Resonanzfrequenz zu isolieren,
wobei die erste Feder eine variable Federkonstante aufweist, die als Reaktion auf Änderungen des Gewichts der Einrichtung (110) geändert werden kann, um im Wesentlichen die vorherbestimmte Resonanzfrequenz beizubehalten;
eine zweite Feder (135), die in das Aufhängungssystem eingebaut ist, um die Einrichtung (110) von mindestens einem Teil des Stoßes entlang einer im Wesentlichen senkrechten Achse zu isolieren; und
ein erstes Gestänge (142), das die erste und zweite Feder koppelt, um die variable Federkonstante als Reaktion auf Änderungen des Gewichts der Einrichtung zu ändern, um im Wesentlichen die vorherbestimmte Resonanzfrequenz beizubehalten.

2. Vorrichtung nach Anspruch 1, wobei die Einrichtung (110) einen Sitz des Fahrzeugs umfasst.

3. Vorrichtung nach Anspruch 1, wobei die erste Feder (155/156) ein Federtyp ist, der aus einer Gruppe von Federtypen ausgewählt wird, die aus einer Gasfeder, einer Hydraulikfeder und einer Feder, die eine Kombination aus Gas und Fluid verwendet, besteht.

4. Vorrichtung nach Anspruch 3, wobei das erste Gestänge (142) einen Fluss einer Substanz zwischen den ersten (155/156) und zweiten (135) Federn führt, wobei die Substanz einen physikalischen Zustand aufweist, der aus einer Gruppe von physikalischen Zuständen ausgewählt wird, die aus einem Gas, einer Flüssigkeit und einer Kombination aus einem Gas und einer Flüssigkeit besteht; und ferner umfassend einen ersten Dämpfer (145, 146), der in das erste Gestänge (142) eingebaut ist und als Tiefpassfilter dient, um im Wesentlichen eine Änderung des Drucks der Substanz in der zweiten Feder zu erlauben, die einer Änderung des Gewichts der Einrichtung (110) entspricht, das auf die erste Feder zu übertragen ist, um die Federkonstante der ersten Feder anzupassen, und der im Wesentlichen verhindert, dass eine Änderung des Drucks der Substanz in der zweiten Feder, die der Tatsache entspricht, dass die zweite Feder die Einrichtung von dem Stoß isoliert, auf die erste Feder übertragen wird.

5. Vorrichtung nach Anspruch 4, ferner umfassend ein Ventil (133), um den Druck der Substanz innerhalb der zweiten Feder abzuändern, um eine Höhe der Einrichtung (110) im Verhältnis zu dem Teil des Fahrzeugs anzupassen.

6. Vorrichtung nach Anspruch 4, ferner umfassend:
eine dritte Feder (156/155), die in das Aufhängungssystem eingebaut ist, die mindestens teilweise zu der ersten Feder (155/156) entgegengesetzt wirkt und eine variable Federkonstante aufweist, die sich als Reaktion auf Änderungen des Gewichts der Einrichtung ändert, um mit der ersten Feder zusammenzuwirken, um im Wesentlichen die vorherbestimmte Resonanzfrequenz beizubehalten;
ein zweites Gestänge (142), das die dritte und zweite Feder koppelt, um einen Fluss der Substanz dazwischen zu ermöglichen; und
einen zweiten Dämpfer (146, 145), der in das zweite Gestänge eingebaut ist und als Tiefpassfilter dient, um im Wesentlichen eine Änderung des Drucks der Substanz in der zweiten Feder zu erlauben, die einer Änderung des Gewichts der Einrichtung (110) entspricht, das auf die dritte Feder zu übertragen ist, um die Federkonstante der dritten Feder anzupassen, und der im Wesentlichen verhindert, dass eine Änderung des Drucks der Substanz in der zweiten Feder (135), die der Tatsache entspricht, dass die zweite Feder die Einrichtung von dem Stoß isoliert, auf die dritte Feder übertragen wird.

7. Vorrichtung nach Anspruch 6, ferner umfassend:
ein drittes Gestänge (143), das die erste (155) und dritte (156) Feder koppelt, um einen Fluss der Substanz dazwischen zu ermöglichen; und
einen dritten Dämpfer (149), der in das dritte Gestänge eingebaut ist.

8. Vorrichtung nach Anspruch 1, wobei die erste Feder (135) eine mechanische Feder ist.

9. Vorrichtung nach Anspruch 8, wobei das erste Gestänge ein Drehmoment zwischen der ersten (155) und zweiten (135) Federn überträgt; und ferner umfassend einen Dämpfer (148), der in das erste Gestänge eingebaut ist und als Tiefpassfilter dient, um im Wesentlichen eine Änderung des Drehmoments zu erlauben, die einer Änderung des Gewichts der Einrichtung (110) entspricht, das von der zweiten Feder (135) auf die erste Feder zu übertragen ist, um die Federkonstante der ersten Feder anzupassen, und der im Wesentlichen verhindert, dass eine Änderung des Drehmoments, die der Tatsache entspricht, dass die zweite Feder die Einrichtung von dem Stoß isoliert, auf die erste Feder übertragen wird.

10. Vorrichtung nach Anspruch 9, ferner umfassend eine dritte Feder (156), die in das Aufhängungssystem eingebaut ist, die mindestens teilweise entgegengesetzt zu der ersten Feder (155) wirkt und eine variable Federkonstante aufweist, die sich als Reaktion auf Änderungen des Gewichts der Einrichtung (110) ändert, um mit der ersten Feder zusammenzuwirken, um im Wesentlichen die vorherbestimmte Resonanzfrequenz beizubehalten, und wobei das Gestänge die ersten und dritten Federn koppelt, um das Drehmoment dazwischen zu übertragen.

11. Verfahren, umfassend das Ermöglichen, dass eine Federkonstante einer ersten Feder (155/156) eines Einrichtungs- (110) Aufhängungssystems eines Fahrzeugs, das unterwegs einen Stoß erfährt, als Reaktion auf Änderungen des Gewichts der Einrichtung angepasst wird, um im Wesentlichen eine vorherbestimmte Resonanzfrequenz der Bewegung entlang einer im Wesentlichen waagerechten Achse beizubehalten, und zwar durch Isolieren der Einrichtung von mindestens einem Teil des Stoßes entlang der im Wesentlichen waagerechten Achse durch Verbinden der ersten Feder (155/156) mit der zweiten Feder (135), welche die Einrichtung von mindestens einem Teil des Stoßes entlang einer im Wesentlichen senkrechten Achse isoliert.

12. Verfahren nach Anspruch 11, wobei das Verbinden der ersten Feder (155/156) mit der zweiten Feder (135) das Koppeln der ersten und zweiten Federn umfasst, um zu ermöglichen, dass eine Substanz, die einen physikalischen Zustand aufweist, der aus der Gruppe ausgewählt wird, die aus einem Gas, einer Flüssigkeit und einer Kombination aus einem Gas und einer Flüssigkeit besteht, dazwischen fließen kann, wobei sich der Druck der Substanz innerhalb der zweiten Feder als Reaktion auf Änderungen des Gewichts der Einrichtung (110) ändert.

13. Verfahren nach Anspruch 12, ferner umfassend das Ändern des Drucks der Substanz in der zweiten Feder (135), um eine Höhe der Einrichtung (110) im Verhältnis zu dem Teil des Fahrzeugs anzupassen.

14. Verfahren nach Anspruch 11, wobei das Verbinden der ersten Feder (155/156) mit der zweiten Feder (135) das mechanische Koppeln der ersten und zweiten Federn umfasst, um zu ermöglichen, dass ein Drehmoment dazwischen übertragen wird, wobei sich das Drehmoment, das von der zweiten Feder übertragen wird, als Reaktion auf Änderungen des Gewichts der Einrichtung ändert.

15. Verfahren nach Anspruch 14, ferner umfassend das Dämpfen der Übertragung eines Drehmoments zwischen der ersten (155/156) und zweiten (135) Federn, um im Wesentlichen eine Änderung des Drehmoments zu erlauben, das von der zweiten Feder auf die erste Feder zu übertragen ist, die einer Änderung des Gewichts der Einrichtung (110) entspricht, und im Wesentlichen das Verhindern einer Änderung des Drehmoments, das von der zweiten Feder auf die erste Feder übertragen wird, die der Tatsache entspricht, dass die zweite Feder die Einrichtung von dem Stoß isoliert.

## Revendications

1. Appareil comprenant :
un système de suspension (1000) couplé à une partie d'un véhicule et isolant une installation (110) du véhicule d'une secousse subie par le véhicule lors du déplacement ;
un premier ressort (155/156) incorporé dans le système de suspension pour isoler l'installation d'au moins une partie de la secousse le long d'un axe sensiblement horizontal par le biais d'un mouvement le long de l'axe sensiblement horizontal à une fréquence de résonance prédéterminée, dans lequel le premier ressort a une constante de rappel variable qui peut être modifiée en réponse aux changements de poids de l'installation (110) pour maintenir sensiblement la fréquence de résonance prédéterminée ;
un deuxième ressort (135) incorporé dans le système de suspension pour isoler l'installation (110) d'au moins une partie de la secousse le long d'un axe sensiblement vertical ; et
une première liaison (142) couplant les premier et deuxième ressorts pour modifier la constante de rappel variable en réponse aux changements de poids de l'installation pour maintenir sensiblement la fréquence de résonance prédéterminée.

2. Appareil selon la revendication 1, dans lequel l'installation (110) comprend un siège du véhicule.

3. Appareil selon la revendication 1, dans lequel le premier ressort (155/156) est un type de ressort choisi dans un groupe de types de ressorts constitué d'un ressort à gaz, d'un ressort hydraulique et d'un ressort utilisant une combinaison de gaz et de fluide.

4. Appareil selon la revendication 3, dans lequel la première liaison (142) conduit un écoulement d'une substance entre les premier (155/156) et deuxième (135) ressorts, la substance ayant un état physique choisi dans un groupe d'états physiques constitués d'un gaz, d'un liquide et d'une combinaison d'un gaz et d'un liquide ; et comprenant en outre un premier amortisseur (145, 146) incorporé dans la première liaison (142) et faisant office de filtre passe-bas pour permettre sensiblement à un changement de pression de la substance dans le deuxième ressort qui correspond à un changement de poids de l'installation (110) d'être transféré au premier ressort pour ajuster la constante de rappel du premier ressort, et empêchant sensiblement un changement de pression de la substance dans le deuxième ressort qui correspond au deuxième ressort isolant l'installation de la secousse d'être transféré au premier ressort.

5. Appareil selon la revendication 4, comprenant en outre une valve (133) pour modifier la pression de la substance à l'intérieur du deuxième ressort pour ajuster une hauteur de l'installation (110) par rapport à la partie du véhicule.

6. Appareil selon la revendication 4, comprenant en outre :
un troisième ressort (156/155) incorporé dans le système de suspension, agissant au moins partiellement en opposition avec le premier ressort (155/156), et ayant une constante de rappel variable qui change en réponse aux changements de poids de l'installation pour coopérer avec le premier ressort pour maintenir sensiblement la fréquence de résonance prédéterminée ;
une deuxième liaison (142) couplant les troisième et deuxième ressorts pour permettre un écoulement de la substance entre eux ; et
un deuxième amortisseur (146, 145) incorporé dans la deuxième liaison et faisant office de filtre passe-bas pour permettre sensiblement à un changement de pression de la substance dans le deuxième ressort qui correspond à un changement de poids de l'installation (110) d'être transféré au troisième ressort pour ajuster la constante de rappel du troisième ressort, et empêchant sensiblement un changement de pression de la substance dans le deuxième ressort (135) qui correspond au deuxième ressort isolant l'installation de la secousse d'être transféré au troisième ressort.

7. Appareil selon la revendication 6, comprenant en outre :
une troisième liaison (143) couplant les premier (155) et troisième (156) ressorts pour permettre un écoulement de la substance entre eux ; et
un troisième amortisseur (149) incorporé dans la troisième liaison.

8. Appareil selon la revendication 1, dans lequel le premier ressort (135) est un ressort mécanique.

9. Appareil selon la revendication 8, dans lequel la première liaison transfère le couple entre les premier (155) et deuxième (135) ressorts ; et comprenant en outre un amortisseur (148) incorporé dans la première liaison et faisant office de filtre bas pour permettre sensiblement à un changement de couple qui correspond à un changement de poids de l'installation (110) d'être transféré du deuxième ressort (135) au premier ressort pour ajuster la constante de rappel du premier ressort, et permettant sensiblement à un changement de couple qui correspond au deuxième ressort isolant l'installation de la secousse d'être transféré du deuxième ressort au premier ressort.

10. Appareil selon la revendication 9, comprenant en outre un troisième ressort (156) incorporé dans le système de suspension, agissant au moins partiellement en opposition avec le premier ressort (155) et ayant une constante de rappel variable qui change en réponse aux changements de poids de l'installation (110) pour coopérer avec le premier ressort pour maintenir sensiblement la fréquence de résonance prédéterminée, et dans lequel la liaison couple les premier et troisième ressorts pour transférer le couple entre eux.

11. Procédé comprenant le fait de permettre à une constante de rappel d'un premier ressort (155/156) d'un système de suspension d'installation (110) d'un véhicule subissant une secousse lors du déplacement d'être ajustée en réponse aux changements de poids de l'installation pour maintenir sensiblement une fréquence de résonance prédéterminée de mouvement le long d'un axe sensiblement horizontal en isolant l'installation d'au moins une partie de la secousse le long de l'axe sensiblement horizontal en reliant le premier ressort (155/156) au deuxième ressort (135) isolant l'installation d'au moins une partie de la secousse le long d'un axe sensiblement vertical.

12. Procédé selon la revendication 11, dans lequel la liaison du premier ressort (155/156) au deuxième ressort (135) comprend le couplage des premier et deuxième ressorts pour permettre à une substance ayant un état physique choisi dans le groupe constitué d'un gaz, d'un liquide et d'une combinaison d'un gaz et d'un liquide de s'écouler entre eux, dans lequel la pression de la substance à l'intérieur du deuxième ressort change en réponse aux changements de poids de l'installation (110).

13. Procédé selon la revendication 12, comprenant en outre la modification de la pression de la substance à l'intérieur du deuxième ressort (135) pour ajuster une hauteur de l'installation (110) par rapport à la partie du véhicule.

14. Procédé selon la revendication 11, dans lequel la liaison du premier ressort (155/156) au deuxième ressort (135) comprend le couplage, mécaniquement, des premier et deuxième ressorts pour permettre au couple d'être transféré entre eux, dans lequel le couple transmis par le deuxième ressort change en réponse aux changements de poids de l'installation.

15. Procédé selon la revendication 14, comprenant en outre l'amortissement du transfert de couple entre les premier (155/156) et deuxième (135) ressorts pour permettre sensiblement à un changement de couple d'être transféré du deuxième ressort au premier ressort qui correspond à un changement de poids de l'installation (110), et empêchant sensiblement un changement de couple d'être transféré du deuxième ressort au premier ressort qui correspond au deuxième ressort isolant l'installation de la secousse.
